# EUROPÄISCHE PATENTSCHRIFT

(11) **EP 1 836 292 B1**
(45) Veröffentlichungstag und Bekanntmachung des Hinweises auf die Patenterteilung: **22.11.2017**
(21) Anmeldenummer: 06700202.2
(22) Anmeldetag: 12.01.2006
(51) Int. Cl.: C12M 1/00, B65G 1/137, B65G 1/16

(54) **AUTOMATISCHE LAGERVORRICHTUNG UND KLIMASCHRANK FÜR LABORGÜTER**
AUTOMATIC STORING DEVICE AND CLIMATIC CHAMBER FOR LABORATORY EQUIPMENT
DISPOSITIF DE STOCKAGE AUTOMATIQUE ET ARMOIRE CLIMATIQUE POUR ARTICLES DE LABORATOIRE

(30) Priorität: 14.01.2005 DE 102005001888; 28.01.2005 CH 135052005
(43) Veröffentlichungstag der Anmeldung: 26.09.2007
(73) Patentinhaber: LICONIC AG, 9493 Mauren (LI)
(72) Erfinder: MALIN, Cosmas, G., FL-9493 Mauren (LI)
(74) Vertreter: Sutter, Kurt
(86) Internationale Anmeldenummer: PCT/CH2006/000029
(87) Internationale Veröffentlichungsnummer: WO 2006/074569

(56) Entgegenhaltungen:
- EP-A- 1 155 743
- EP-A- 1 209 222
- EP-A- 1 251 164
- EP-A- 1 332 987
- EP-A- 1 441 026
- EP-A- 1 443 101
- EP-A- 1 447 441
- US-A- 5 449 229
- US-A- 5 470 744
- US-A1- 2003 185 656
- US-A1- 2004 115 101

## Beschreibung

### Hinweis auf verwandte Anmeldungen

Diese Anmeldung beansprucht die Priorität der deutschen Patentanmeldung 10 2005 001 888, die am 14 Januar 2005 eingereicht wurde, sowie der Schweizer Patentanmeldung 00135/05, die am 28. Januar 2005 eingereicht wurde. Die ganze Offenbarung dieser beiden Anmeldungen wird hiermit durch Bezug aufgenommen.

### Hintergrund

Die vorliegende Erfindung bezieht sich auf eine automatische Lagervorrichtung und einen Klimaschrank zur Aufnahme von Laborgütern, insbesondere Mikrotiterplatten.

In der chemischen, pharmazeutischen und biologischen Forschung müssen grosse Mengen von Proben getestet, manipuliert und gelagert werden. Die Aufbewahrung der Proben geschieht oft in sogenannten Mikrotiterplatten, die eine Vielzahl von feinen Aufnahmevertiefungen für die Proben enthalten. Mikrotiterplatten haben in der Regel eine genormte Grösse mit einer Grundfläche von ca. 127.76 mm x 85.48 mm (je ± 0.5 mm) gemäss Standard ANSI/SBS 1-2004, 1/8/2004, "for microplates - Footprint Dimensions", und es wurde eine Vielzahl von Geräten bereitgestellt, um derartige Platten oder ähnliche Laborgüter, wie z.B. sog. Labor-"Flasks" zu lagern.

EP 1 332 987 beschreibt eine Lagervorrichtung mit einer Lagergasse, mit zwei der Lagergasse entlang angeordneten Regalen und einem entlang einer horizontalen Führung in der Lagergasse verfahrbaren Regalbediengerät. Das Regalbediengerät besitzt eine entlang einer vertikalen Führung höhenverstellbare und ausfahrbare Aufnahmevorrichtung, mit der einzelne, in den Regalen gelagerte Laborgüter aufgenommen werden können. Insbesondere bei hohen Regalen ist bei derartigen Anlagen darauf zu achten, dass das Regal und das Regalbediengerät ausreichend stabil sind , damit Vibrationen und insbesondere eine unerwünschte Verkippung und/oder eine Torsion der Komponenten vermieden werden. Dies erhöht jedoch aber das Gewicht der Komponenten, was die Konstruktion verteuert und die Geschwindigkeit der Anlage reduziert.

US 2003/0185656 beschreibt ein Lagersystem mit zwei Regalen und dazwischen angeordnetem Regalbediengerät.

### Darstellung der Erfindung

Es stellt sich die Aufgabe, eine Anlage dieser Art mit ausreichend stabilem Regalbediengerät bereitzustellen.

Diese Aufgabe wird von der Lagervorrichtung gemäss den unabhängigen Ansprüchen gelöst.

Erfindungsgemäss ist eine obere und eine untere horizontale Führung vorgesehen, zwischen denen die vertikale Führung angeordnet ist.

Gemäss Erfindung besitzt der Längsantrieb zum Verfahren der vertikalen Führung entlang der horizontalen Führungen obere und untere Antriebsmittel. Die oberen Antriebsmittel dienen dazu, die vertikale Führung an der oberen horizontalen Führung anzutreiben, während die unteren Antriebsmittel dazu dienen, der vertikale Führung an der unteren horizontalen Führung anzutreiben. Indem die vertikale Führung an ihrem oberen und unteren Endbereich angetrieben wird, kann ein Verkippen derselben beim Anfahren und Abbremsen vermieden werden, selbst wenn die vertikale Führung relativ leicht und/oder lang gebaut ist.

In einer bevorzugten Ausführung der Erfindung ist die vertikale Führung in ihrem oberen und unteren Endbereich drehfest an der oberen bzw. der unteren horizontalen Führung gelagert, so dass eine Torsion der vertikalen Führung (16) vermieden wird. Unter "drehfest" wird dabei verstanden, dass das jeweilige Ende der vertikalen Führung gegenüber der jeweiligen horizontalen Führung sich nicht um eine senkrechte Drehachse drehen kann. Auch mit dieser Massnahme wird die Stabilität der vertikalen Führung verbessert, was eine einfache und damit leichtere Bauweise zulässt.

In einer anderen bevorzugten Ausführung der Erfindung sind die vertikalen Pfosten der Regale mit den Tablaren fest verbunden, so dass eine gegenseitige Verspannung und Stabilisierung erreicht wird.

In einer anderen bevorzugten Ausführung bezieht sich die Erfindung auf einen Klimaschrank mit einer automatischen Lagervorrichtung der oben erwähnten Art und mit mindestens einem Lagerschacht. Der Lagerschacht weist mehrere übereinander angeordnete Lagerpositionen zur Aufnahme von Laborgütern auf. Das Regalbediengerät besitzt mindestens einen Antrieb für eine vertikale und/oder horizontale Bewegung. Der Antrieb weist ein Ritzel auf, welches in eine Zahnstange eingreift. Die Verwendung von Zahnstangen ist in Klimaschränken von Vorteil, weil Zahnstangen-Antriebe in einem weiten Temperaturbereich einwandfrei funktionieren. Dies ist z.B. bei Riemenantrieben nur bedingt der Fall.

Die Erfindung bezieht sich auch auf einen Klimaschrank mit einer entsprechenden Lagervorrichtung.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 die Ansicht eines Klimaschranks mit erfindungsgemässer Lagervorrichtung,
Fig. 2 einen schematischen, horizontalen Schnitt durch den Klimaschrank nach Fig. 1,
Fig. 3 eine Ausführung der Lagervorrichtung, wobei nur vier der Lagerschächte eingezeichnet sind,
Fig. 4 eine Detailansicht des Regalbediengeräts,
Fig. 5 einen Teil eines Lagerschachts,
Fig. 6 eine Ansicht eines transparent dargestellten Lagerschachts,
Fig. 7 eine vergrösserte Ansicht eines transparent dargestellten Lagerschachts,
Fig. 8 eine zweite Ausführung des Regalbediengeräts,
Fig. 9 eine schematische Darstellung des Torsions- und Kippstabilisators einer zweiten Ausführung des Regalbediengeräts,
Fig. 10 eine schematische Darstellung der Anordnung von Fig. 9 in Längsrichtung der Lagergasse gesehen,
Fig. 11 eine erste alternative Ausführung zur Anordnung nach Fig. 10 und
Fig. 12 eine zweite alternative Ausführung zur Anordnung nach Fig. 10.

### Wege zur Ausführung der Erfindung

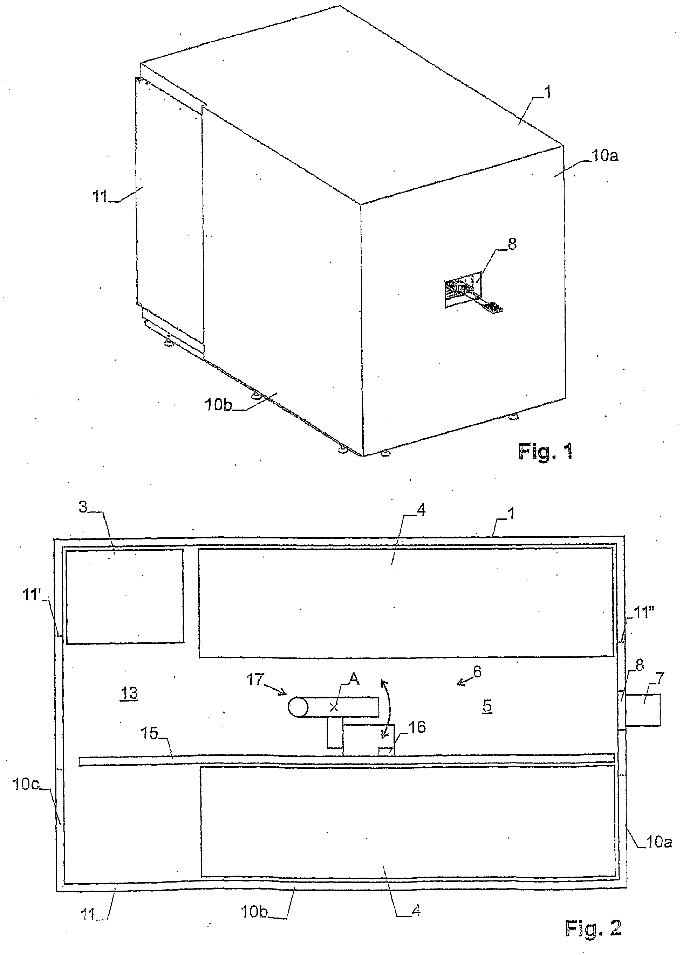

Der Klimaschrank gemäss Fig. 1 und 2 besitzt ein Gehäuse 1, in dessen Innenraum eine Kontrolleinheit 3 mit Steuerung und Klimagenerator und eine Lagervorrichtung untergebracht sind. Die Lagervorrichtung besitzt zwei Regale 4, die beiderseits einer Lagergasse 5 angeordnet sind. In der Lagergasse 5 läuft ein Regalbediengerät 6, mit welchem automatisiert auf alle Laborgüter in den Regalen 4 zugegriffen werden kann.

An einem Ende des Klimaschranks, in der Verlängerung der Lagergasse 5, ist eine Übergabestation 7 angeordnet. Sie dient der temporären Aufnahme einzelner Laborgüter bei einer Übergabe zwischen der Aufnahmevorrichtung 17 des Regalbediengeräts 6 und einem äusseren Transportsystem. Die Übergabestation 7 besteht z.B. aus einem an einer Wand 10a des Klimaschranks befestigten Ablagetisch zur Aufnahme der Laborgüter und ist bei einer automatischen Türe 8 in der Wand 10a des Lagerschranks angeordnet. Die Grösse der automatischen Türe 8 entspricht ungefähr der Grösse der umzuschlagenden Laborgüter, so dass Klimaverluste beim Öffnen der Türe 8 klein bleiben.

Die automatische Türe 8 kann auch in der der Wand 10a gegenüberliegenden Wand 10c angeordnet werden.

An dem der automatischen Türe 8 gegenüberliegenden Ende des Lagerschranks, in einer zweiten Wand 10b parallel zur Lagergasse 5, ist eine weitere Zugangstüre 11 vorgesehen. Durch diese sich nach aussen öffnende Türe kann sich das Bedienpersonal Zutritt in den Klimaschrank verschaffen. Die Türe führt in einen Vorraum 13, der zwischen den Regalen 4 und der den Regalen 4 gegenüberliegenden dritten Wand 10c gebildet wird. In diesem Vorraum 13 ist die Kontrolleinheit 3 angeordnet.

In der Ausführung nach Fig. 2 ist die Zugangstüre 11 in der zweiten Wand 10b angeordnet. Alternativ oder zusätzlich hierzu kann die Türe auch in einer quer zur Lagergasse 5 angeordneten Wand angeordnet sein, d.h. in der ersten Wand 10a oder der der ersten gegenüberliegenden dritten Wand 10c, vorteilhaft in der Verlängerung der Lagergasse 5, wie dies in Fig. 2 gestrichelt mit Bezugsziffer 11' bzw. 11" angedeutet ist. Wird die Zugangstüre in Position 11" in der ersten Wand 10a angeordnet, so wird die automatische Türe 8 vorteilhaft in der Zugangstüre angeordnet.

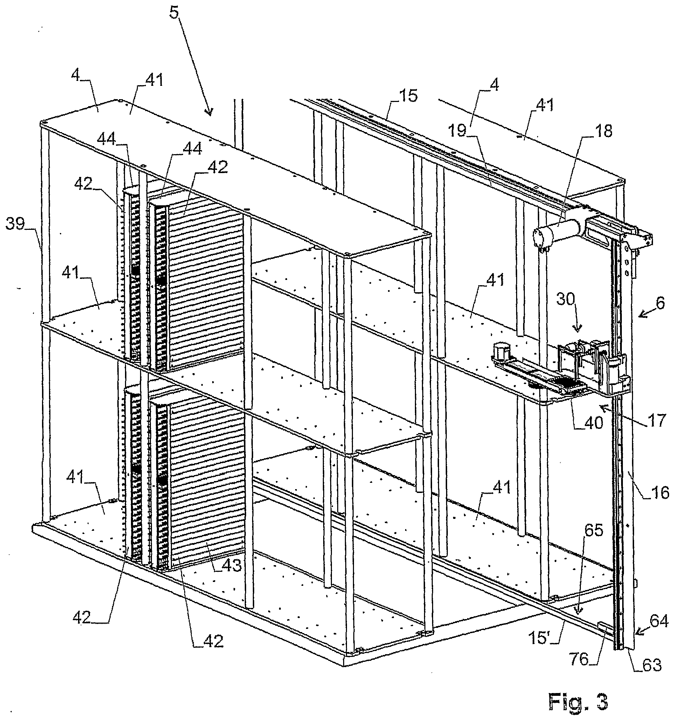

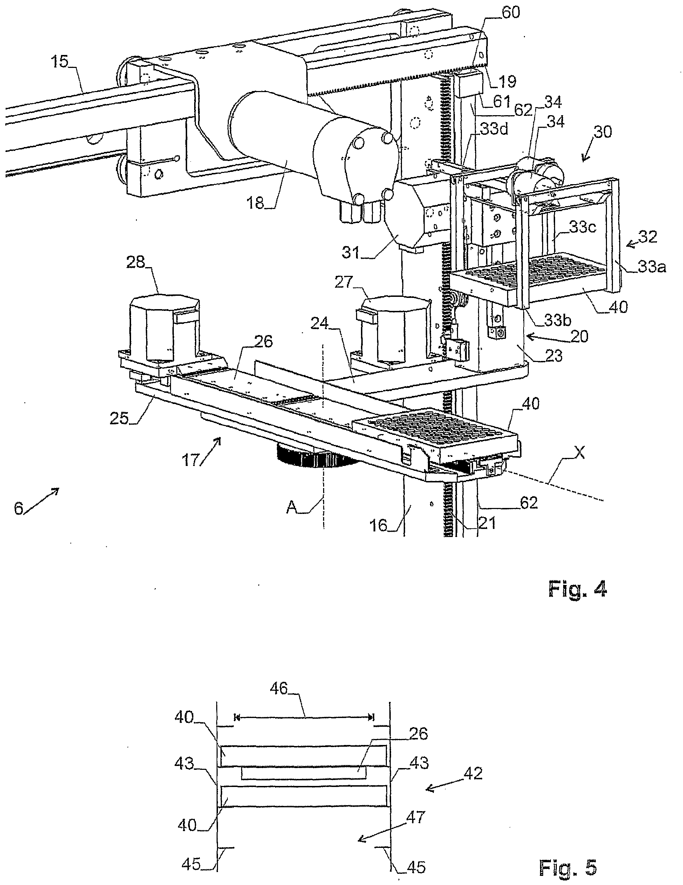

Der Aufbau der Lagervorrichtung ist am besten aus Fig. 3 und 4 ersichtlich. Wie erwähnt, besitzt sie zwei Regale 4 entlang der Lagergasse 5. Das Regalbediengerät 6 besitzt eine stationäre, obere horizontale Führung 15 in Form einer horizontalen Profilschiene, die parallel zur Regalgasse 5 im Deckenbereich des Klimaschranks angeordnet ist. An der oberen horizontalen Führung 15 ist eine vertikale Führung 16 in Form einer vertikalen Profilschiene geführt. Die vertikale Führung 16 ist an der oberen horizontalen Führung 15 angeordnet und erstreckt sich von dieser nach unten. Am unteren Ende 63 der vertikalen Führung 16 ist noch eine stationäre, untere horizontale Führung 15' vorgesehen. An der vertikalen Führung 16 ist eine Aufnahmevorrichtung 17 befestigt.

Zur Bewegung der vertikalen Führung 16 entlang der oberen horizontalen Führung 15 dient ein am oberen Ende der vertikalen Führung 16 befestigter Horizontalmotor 18, der ein Zahnrad antreibt, das in eine Zahnstange 19 der oberen horizontalen Führung 15 eingreift.

Die Bewegung der vertikalen Führung 16 gegenüber der oberen horizontalen Führung 15 wird von einem Zahnrad 60 aufgenommen. Das Zahnrad 60 ist an der vertikalen Führung 16 drehbar gelagert und greift in die Zahnstange 19 der oberen horizontalen Führung 15 ein. Bei einer Bewegung der vertikalen Führung 16 entlang der oberen horizontalen Führung 15 wird das Zahnrad 60 somit in Drehung versetzt. Über ein Umlenkgetriebe 61 wird diese Drehung auf eine Welle 62 übertragen, die sich entlang der vertikalen Führung 16 zu deren unterem Ende 63 erstreckt (vgl. Fig. 3). Die Welle 62 ist an der vertikalen Führung 16 drehbar befestigt und bewegt sich mit dieser in horizontaler Richtung mit. Am unteren Ende 63 der vertikalen Führung 16 treibt die Welle 62 ein unteres Zahnrad 64 an (in Fig. 3 nicht direkt sichtbar). Das untere Zahnrad kämmt als Antriebsritzel eine Zahnstange 65 (in Fig. 3 ebenfalls nicht direkt sichtbar), die der unteren Führung 15' entlang läuft. Somit wird bei einer horizontalen Bewegung der vertikalen Führung 16 nicht nur eine Antriebskraft zwischen der oberen horizontalen Führung 15 und der vertikalen Führung 16, sondern auch eine Antriebskraft zwischen der unteren horizontalen Führung 15' und der vertikalen Führung 16 erzeugt. Das Übersetzungsverhältnis zwischen dem oberen Zahnrad 60 und dem unteren Zahnrad 64 ist dabei so gewählt, dass an den beiden Zahnstangen 19 und 65 jeweils die gleiche Laufgeschwindigkeit erzwungen wird. Somit werden beide Enden der vertikalen Führung 16 kontrolliert geführt und angetrieben. Dadurch wird ein Verkippen der vertikalen Führung 16 beim Anfahren und Bremsen verhindert. Die vertikale Führung kann somit leichter und Platz sparender ausgestaltet werden.

Zur Bewegung der Aufnahmevorrichtung 17 entlang der vertikalen Führung 16 dient ein mit der Aufnahmevorrichtung 17 verbundener Vertikalantrieb 20 (in Fig. 4 hinter Teil 23 verborgen), der ein Zahnrad antreibt, das in eine Zahnstange 21 der vertikalen Führung 16 eingreift.

Zur Halterung der Aufnahmevorrichtung 17 ist eine vertikale Säule 23 vorgesehen, die an ihrem unteren Ende mit einem horizontalen Haltearm 24 verbunden ist. An dem der Säule 23 gegenüberliegenden Ende des Haltearms 24 ist ein länglicher Tisch 25 befestigt. Der Tisch 25 kann gegenüber dem Haltearm 24 um eine vertikale Achse A geschwenkt werden. Wie aus Fig. 2 ersichtlich, liegt die Achse A ungefähr in der Mitte der Lagergasse 5. Zum Verschwenken des Tisches 25 gegenüber dem Haltearm 24 (und somit gegenüber der vertikalen Führung 16) um die Achse A dient ein Schwenkantrieb 27.

Auf dem Tisch 25 ist ein länglicher Träger 26 in Längsrichtung des Tisches verfahrbar angeordnet. Zum Bewegen des Trägers 26 ist am Tisch 25 ein Ausfahrantrieb 28 vorgesehen. Tisch 25 und Träger 26 bilden zusammen die um Achse A schwenkbare und in einer Ausfahrrichtung X ausfahrbare Aufnahmevorrichtung 17.

An der Säule 23 ist weiter eine Vereinzelungsvorrichtung 30 angeordnet. Die Vereinzelungsvorrichtung 30 kann mit einem ersten Vereinzelungsantrieb 31 vertikal der Säule 23 entlang verfahren werden. Sie besitzt einen Greifer 32 zum seitlichen Ergreifen des Laborguts. Der Greifer 32 besitzt mindestens zwei, vorzugsweise vier nach unten ragende Finger 33a - 33d, welche mittels einem zweiten Vereinzelungsantrieb 34 horizontal gegeneinander verfahrbar sind.

Die Vereinzelungsvorrichtung 30 befindet sich, in Längsrichtung der Lagergasse 5 gesehen, entweder vor oder hinter der Schwenkachse A.

Die Aufnahmevorrichtung 17 kann mit dem Schwenkantrieb 28 in drei Stellungen geschwenkt werden. In einer Übergabestellung, die in Fig. 3 dargestellt ist, kann sie parallel zur Lagergasse 5 ausgefahren werden. In dieser Stellung befindet sich der leicht ausgefahrene Träger 26 unterhalb der Vereinzelungsvorrichtung 30. Je nachdem, wie weit der Träger 26 horizontal ausgefahren wird, kann jedes auf dem Träger 26 vorhandenen Laborgüter 40 in Wirkverbindung mit der Vereinzelungsvorrichtung 30 gebracht werden. Die Vereinzelungsvorrichtung kann vertikal auf ein solches Laborgut 40 heruntergefahren werden, so dass sie das Laborgut 40 mit dem Greifer 32 seitlich ergreifen und anheben kann. Ebenso kann sie ein Laborgut auf diese Weise auf einen freien Platz auf dem Träger 26 ablegen.

In der Übergabestellung kann die Aufnahmevorrichtung 17 auch Laborgut und/oder Deckel durch die Türe 8 an die Übergabestation 7 übergeben bzw. von dieser aufnehmen.

Von der Übergabestellung kann die Aufnahmevorrichtung 17, wie in Fig. 2 durch Doppelpfeil angedeutet, nach links oder rechts geschwenkt werden, jeweils um 90° in eine Umschlagstellung, in welcher sie gegen jeweils eines der Regale 4 ausgefahren werden kann. Fig. 4 zeigt die Aufnahmevorrichtung 17 in Umschlagstellung. In dieser Stellung kann die Aufnahmevorrichtung 17 Laborgut in der unten beschriebenen Weise an die Regale 4 abgeben bzw. von diesen aufnehmen.

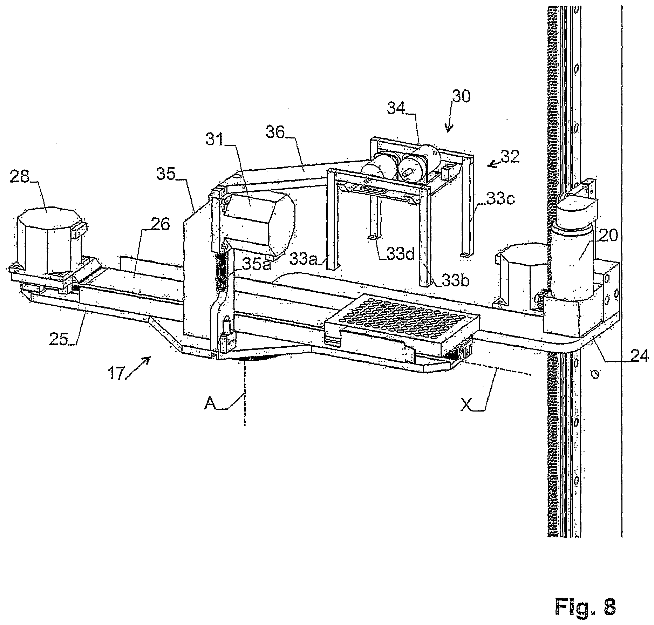

Eine zweite Ausführung der Aufnahmevorrichtung 17 ist in Fig. 8 dargestellt. Von der ersten Ausführung unterscheidet sich diese darin, dass die Vereinzelungsvorrichtung 30 nicht stationär zum Haltearm 24, sondern stationär zum Tisch 25 ist, d.h. sie kann zusammen mit dem Tisch 25 verschwenkt werden. Hierzu ist am Tisch 25 eine Säule 35 mit einer vertikalen Zahnstange 35a angeordnet. In die Zahnstange 35a greift das Zahnrad des vertikal verschiebbaren ersten Vereinzelungsantriebs 31 ein. Am ersten Vereinzelungsantrieb 31 ist ein Tragarm 36 befestigt, der den Greifer 32 trägt. Der Greifer 32 ist im wesentlichen wie der Greifer der ersten Ausführung aufgebaut.

Die Funktionsweise der Ausführung nach Fig. 8 entspricht im wesentlichen jener gemäss Fig. 4, indem der Greifer 32 von oben auf den Träger 26 abgesenkt werden kann, um dort ein Laborgut bzw. einen Deckel aufzunehmen oder abzulegen. Die Ausführung nach Fig. 8 besitzt jedoch, da die Vereinzelungsvorrichtung 30 zusammen mit dem Tisch 25 schwenkbar ist, den Vorteil, dass die Vereinzelungsvorrichtung 30 in jeder Schwenkstellung auf die auf dem Träger 26 liegenden Laborgüter zugreifen kann, was eine schnellere Auftragserledigung erlaubt.

Der Aufbau der Regale 4 ist am besten aus Fig. 3 ersichtlich. Jedes Regal 4 besitzt ein Gestell 39 mit, in der vorliegenden Ausführung, drei Tablaren 41. Die einteiligen Tablare (41) sind mit den vertikalen Pfosten (39) ihres jeweiligen Regals 4 fest verbunden, z.B. verschraubt, wodurch das Regal stabilisiert wird. Am obersten Tablar 41 eines der Regale ist die obere horizontale Führung 15 befestigt, während am untersten Tablar 41 dieses Regals die untere horizontale Führung 15' befestigt ist. Auf den beiden unteren Tablaren 41 jedes Regals 4 stehen Lagerschächte 42, von denen in Fig. 3 nur vier dargestellt sind. Jeder Lagerschacht 42 besitzt zwei vertikale Seitenwände 43, die an ihren oberen und unteren Rändern über horizontale Platten 44 verbunden sind.

Ein Teil eines Lagerschachts 42 ist in Fig. 5 dargestellt. Wie daraus ersichtlich, sind an den Seitenwänden 43 in regelmässigen Abständen nach innen ragende Rippen vorgesehen, welche Auflagen 45 für die aufzunehmenden Laborgüter 40 bilden. Jedes Laborgut 40 wird so in den Lagerschacht 42 eingesetzt, dass einander gegenüberliegende untere Randbereiche des Laborguts von je einer Auflage bzw. Rippe 45 gestützt werden. Somit besitzt jeder Lagerschacht 42 eine vertikale Reihe von durch die Rippen 45 definierten Lagerpositionen 47. Der Lagerschacht 42 ist so tief, dass in jeder Lagerposition 47 mehrere Laborgüter hintereinander Platz finden. Die Breite und Höhe der Lagerpositionen 47 ist den Dimensionen der jeweils aufzunehmenden Laborgüter angepasst.

Die Lagerschächte 42 sind selbsttragende Einheiten, und jeder Lagerschacht kann, ggf. mit den darin gelagerten Laborgütern, als Ganzes der Lagervorrichtung bzw. dem Klimaschrank entnommen werden.

Zwischen gegenüberliegenden Auflagen bzw. Rippen 45 ist ein Zwischenraum 46 vorgesehen, der breiter ist als der ausfahrbare Träger 26. Im Bereich dieses Zwischenraums 46 ist die Unterseite des Laborguts 40 frei zugänglich. Um die Laborgüter zu ergreifen, kann die Aufnahmevorrichtung bzw. der Träger 26 in den Zwischenraum 46 eingeführt werden.

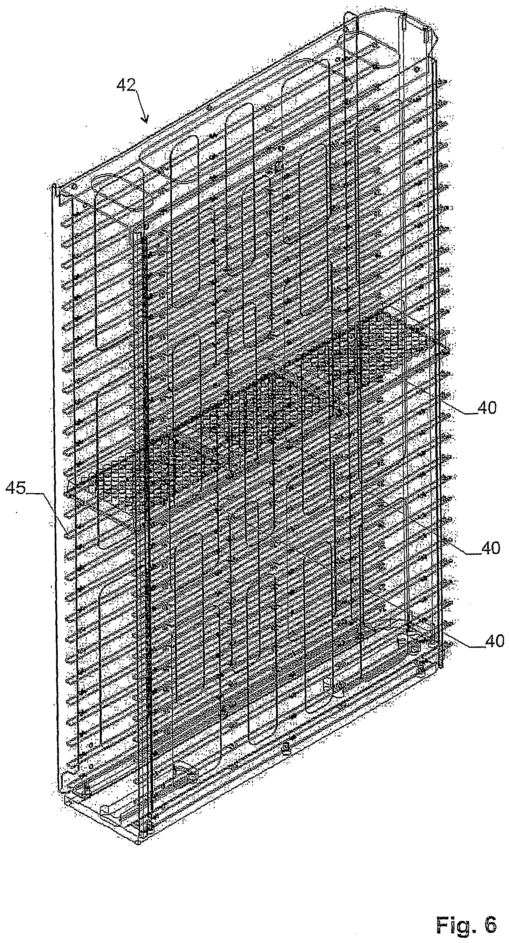

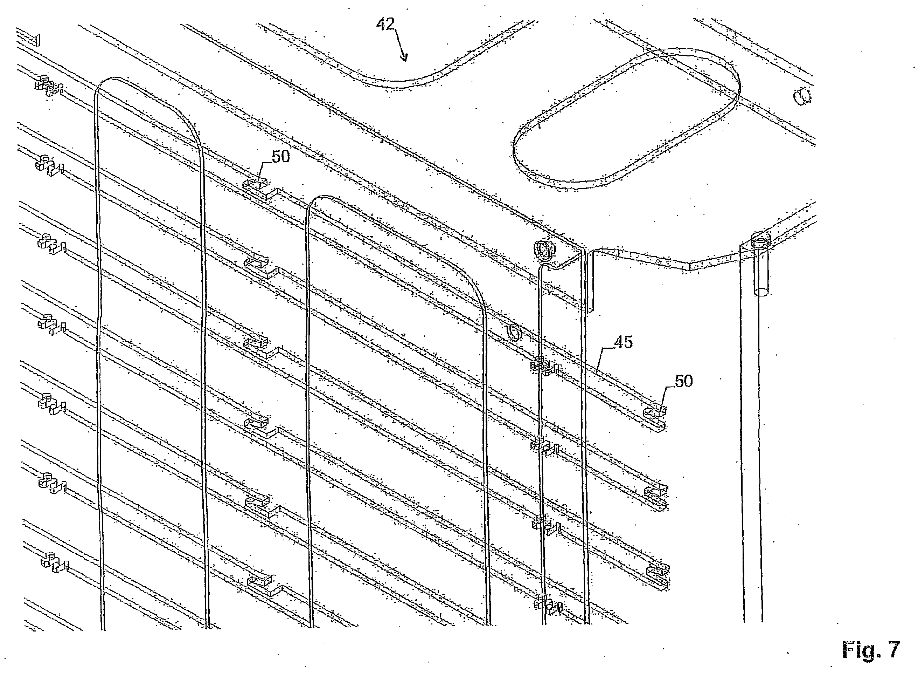

Fig. 6 und 7 zeigen eine konkrete Ausführung eines Lagerschachts 42. Insbesondere aus Fig. 6 sind drei hintereinander angeordnete Laborgüter 40 bzw. Mikrotiterplatten ersichtlich, die auf drei hintereinander angeordneten Lagerplätzen auf den Auflagen bzw. Rippen 45 ruhen. Damit die Laborgüter 40 in Längsrichtung der Lagerposition 47 definiert gehalten werden und nicht verrutschen können, besitzt jeder Lagerplatz zur Aufnahme Haltemittel 50, mit welchen das jeweilige Laborgut in Längsrichtung der Lagerposition 47 festgehalten werden kann. Die Haltemittel 50 werden im Ausführungsbeispiel gemäss Fig. 6 und 7 von Erhöhungen gebildet, die von den Auflagen 45 gegen oben ragen. Bei den Erhöhungen handelt es sich um nach oben gebogene Zungen der als Bleche ausgestalteten Auflagen 45.

Die Funktion der beschriebenen Vorrichtung ist wie folgt:
Um ein bestimmtes Laborgut aus einer bekannten Position in den Regalen 4 der Lagervorrichtung zu entnehmen, wird die Aufnahmevorrichtung 17 in die Umschlagstellung geschwenkt und horizontal und vertikal so verfahren, dass sie sich vor der Lagerposition 47 des bestimmten Laborguts befindet, und zwar so, dass die Oberseite des Trägers 26 etwas tiefer als die Unterseite des Laborguts zu liegen kommt. Sodann wird der Träger 26 in das Regal 4 ausgefahren und mit dem Vertikalantrieb 20 soweit angehoben, dass er in den Zwischenraum 46 eintritt und alle auf den Rippen 45 der betreffenden Lagerposition 47 hintereinander angeordneten Lagergüter zusammen anhebt. Nun wird der Träger 26 wieder zurückgezogen und die Aufnahmevorrichtung 17 wird in die Übergabestellung geschwenkt. In dieser Zwischenlagerposition wird der Träger 26 soweit ausgefahren, dass das zu entnehmende Laborgut 40 genau unterhalb der Vereinzelungsvorrichtung 30 zu liegen kommt. Jetzt senkt sich die Vereinzelungsvorrichtung 30 ab, ergreift das Laborgut 40 und hebt dieses an. Nachdem das gewünschte Laborgut 40 auf diese Weise von der Aufnahmevorrichtung 17 entfernt worden ist, wird die Aufnahmevorrichtung 17 in die Umschlagstellung zurück geschwenkt, in das Regal 4 ausgefahren und etwas abgesenkt, so dass die übrigen Laborgüter wieder in ihrer Lagerposition 47 abgelegt werden. Der nun leere Träger 26 wird zurückgezogen, in die Übergabestellung geschwenkt und soweit ausgefahren, dass sein Endbereich unter der Vereinzelungsvorrichtung 30 liegt. Die Vereinzelungsvorrichtung senkt sich wieder ab und gibt das zuvor entnommene Laborgut 40 an den Träger 26 ab. Nun kann die Aufnahmevorrichtung 17 zur Türe 8 gefahren werden. Die Türe 8 wird geöffnet und der Träger 26 wird ausgefahren und abgesenkt, so dass er das Laborgut in der Übergabeposition 7 absetzt.

Um ein einzelnes Laborgut 40 an einer vorgegebenen Position in den Regalen 4 abzulegen, wird der umgekehrte Prozess durchlaufen. Die Aufnahmevorrichtung 17 fährt zur Türe 8, der Träger 26 wird ausgefahren und hebt das in der Übergabeposition 7 bereitgestellte Laborgut 40 an. Der Träger 26 wird eingefahren. Das Laborgut 40 wird in den Wirkbereich der Vereinzelungsvorrichtung 30 gebracht, welche es vom Träger 26 entnimmt. Die Aufnahmevorrichtung 17 wird zur gewünschten Lagerposition 47 gefahren und in die Umschlagstellung geschwenkt. Der Träger 26 fährt aus, hebt die sich bereits in der Lagerposition 47 befindlichen Laborgüter an, zieht sich zurück und schwenkt in die Übergabestellung. Er wird soweit horizontal ausgefahren, dass ein freier Platz des Tisches unterhalb der Vereinzelungsvorrichtung 30 zu liegen kommt, worauf die Vereinzelungsvorrichtung 30 dort das neue Laborgut aufsetzt. Sodann werden alle Laborgüter auf dem Träger 26 zurück in das Regal gelegt, indem der Träger 26 in die Umschlagstellung zurückschwenkt, ausfährt, sich absenkt und die Laborgüter 40 auf den Auflagen bzw. Rippen 45 ablegt. Dann wird der Träger 26 wieder zurückgezogen.

Um eine höhere Umschlagkapazität zu erreichen, können auch mehrere Laborgüter 40 gleichzeitig auf dem Tisch 25 umgeschlagen werden. Beispielsweise kann der Träger 26 drei hintereinander liegende Laborgüter aus einer Regalposition entnehmen und zusammen zur Übergabeposition 7 bringen, wo die Laborgüter zusammen übernommen oder bearbeitet werden. In umgekehrter Weise können mehrere Laborgüter von der Übergabeposition 7 in einem Arbeitsschritt gemeinsam zu einem Lagerplatz gebracht und dort hintereinander abgelegt werden.

Denkbar ist weiter, dass die Vereinzelungsvorrichtung 30 in der Lage ist, mehrere Laborgüter gleichzeitig zwischenzuspeichern. Beispielsweise kann sie mehrere Laborgüter aufnehmen, welche sodann von der Übergabeposition 7 übernommen werden. Hierzu muss die Übergabeposition mit Mitteln ausgestaltet sein, um die Laborgüter direkt von der Vereinzelungsvorrichtung 30 zu übernehmen.

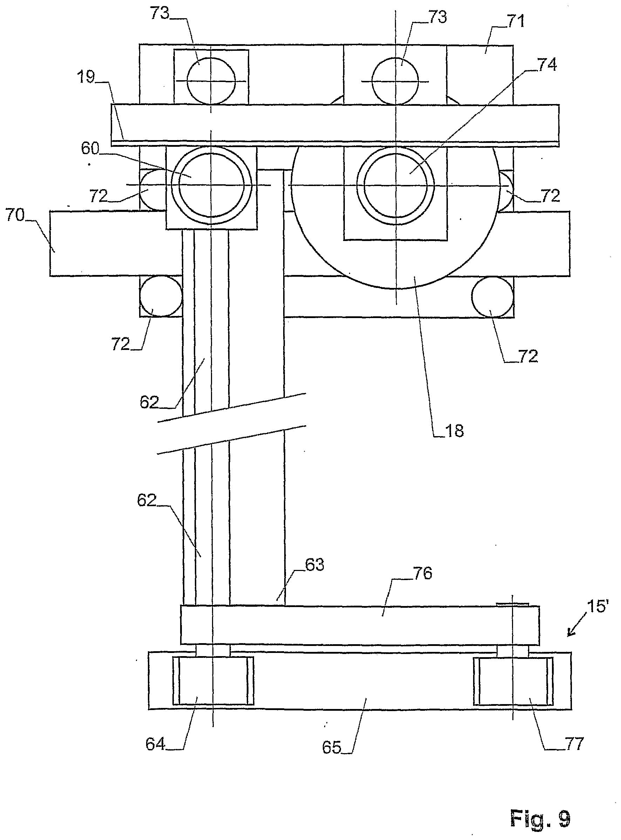

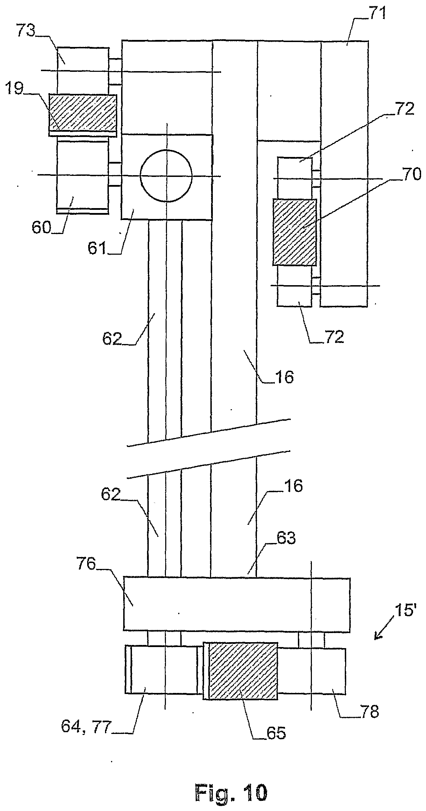

Fig. 9 und 10 zeigen eine weitere Ausführung des Längsantriebs der erfindungsgemässen Vorrichtung. In Fig. 9 besteht die obere horizontale Führung 15 einerseits aus einer Führungsschiene 70 und, davon getrennt, andererseits aus der Zahnstange 19. Die vertikale Führung 16 bzw. ein mit ihr verbundener Laufwagen 71 ist mit vier Laufrollen 72 an der Führungsschiene 70 geführt. Der Laufwagen 71 trägt auch das obere Zahnrad 60 sowie den Horizontalmotor 18, sowie zwei Andruckrollen 73, von denen eine dem oberen Zahnrad 60 und die andere dem Antriebsritzel 74 des Horizontalmotors 18 gegenüber liegt.

Die Drehung des oberen Zahnrads 60 wird, wie in der ersten Ausführung nach Fig. 3 und 4, über das Getriebe 61 auf die Welle 62 übertragen. Von der Welle 62 gelangt die Rotation direkt, d.h. ohne weitere Umlenkung, auf das untere Zahnrad 64, welches die Zahnstange 65 der unteren horizontalen Führung 15' kämmt.

Somit besitzt die beschriebene Vorrichtung, wie auch jene gemäss Fig. 3 und 4, also einen Horizontalantrieb mit oberen und unteren Antriebsmitteln. Die oberen Antriebsmittel, umfassend den Horizontalmotor 18 und sein Ritzel 74, treiben die vertikale Führung 16 an der oberen horizontalen Führung 15 an. Die unteren Antriebsmittel, umfassend das Zahnrad 60, das Getriebe 61, die Welle 62 und das Zahnrad 64, treiben die vertikale Führung 16 an der unteren horizontalen Führung 15' ein. Die beiden Antriebsmittel sind über die Welle 62 gekoppelt und arbeiten synchron, um ein Kippen der vertikalen Führung 16 zu verhindern.

Wie insbesondere aus Fig. 9 ersichtlich, ist am unteren Ende 63 der vertikalen Führung 16 ein Fuss 76 angeordnet. (Ein entsprechender Fuss 76 ist auch in der Ausführung gemäss Fig. 3 ersichtlich.) Der Fuss 76 ist fest am unteren Ende 63 der vertikalen Führung 16 gelagert und läuft (im eingangs genannten Sinne) drehfest auf der unteren horizontalen Führung 15'. Dies wird erreicht, indem am Fuss 76 beabstandet vom ersten unteren Zahnrad 64 ein zweites unteres Zahnrad 77 vorgesehen ist, welches auf der Zahnstange 65 der unteren horizontalen Führung 15 läuft, sowie zwei untere Andruckrollen 78, von denen eine dem ersten unteren Zahnrad 64 und die andere dem zweiten unteren Zahnrad 77 zugeordnet ist und die von der Gegenseite auf die Zahnstange 65 drücken.

Durch die drehfeste Lagerung des Fusses 76 auf der unteren horizontalen Führung 15' wird eine Torsion der vertikalen Führung 16 um Ihre Längsachse verhindert. Eine solche Torsion kann ansonsten insbesondere dann auftreten, wenn sich die Aufnahmevorrichtung 17 im unteren Bereich der vertikalen Führung befindet.

Eine drehfeste Lagerung der vertikalen Führung 16 ist vorzugsweise an beiden ihrer Enden vorgesehen. Im vorliegenden Fall bildet auch der Wagen 71 eine derartige drehfeste Lagerung am oberen Ende der vertikalen Führung 16, z.B. indem die Andruckrollen 72 in geeigneten Spurrillen geführt werden (nicht gezeigt).

Eine drehfeste Lagerung wird in den beschriebenen Ausführungsbeispielen also dadurch erreicht, dass die vertikale Führung 16 an der oberen und der unteren horizontalen Führung 15 bzw. 15' über je mindestens zwei voneinander beabstandete Paare von Andruckrollen und/oder Zahnrädern geführt ist.

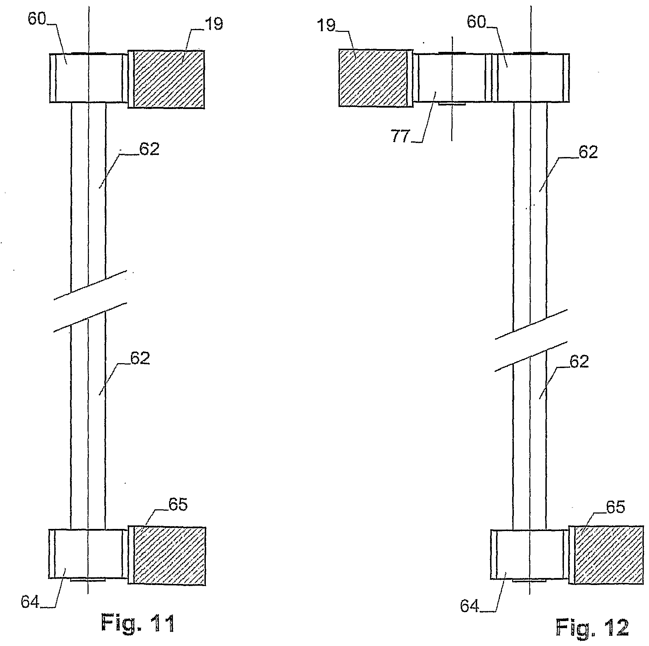

In der Ausführung nach Fig. 9 und 10 sind die Zähne der Zahnstange 19 an der Unterseite der Zahnstange 19 angeordnet, weshalb die Drehachse des Zahnrads 60 horizontal angeordnet sein muss und ein Umlenkgetriebe 61 benötigt wird, um die Drehung vom Zahnrad 60 auf die Welle 62 zu übertragen. Das Umlenkgetriebe 61 kann entfallen, wenn die Zähne an einer vertikalen Seitenfläche der Zahnstange 19 angeordnet sind. Dies ist in Fig. 11 und 12 illustriert. Schauen die Zähne der Zahnstange 19 zur gleichen Seite wie jene der Zahnstange 65, so kann die Welle 62 die Drehbewegung direkt vom oberen Zahnrad 60 auf das untere Zahnrad 64 übertragen, vgl. Fig. 11. Schauen die Zähne der Zahnstangen 19 und 65 in entgegengesetzte Richtungen, so wird ein Umkehrritzel 77 benötigt, wie dies in Fig. 12 dargestellt ist.

In der Ausführung nach Fig. 9 und 10 läuft das Ritzel 74 des Horizontalmotors 18 in der gleichen Zahnstange 19 wie das Zahnrad 60, das die Welle 62 antreibt. Je nach Anordnung des Ritzels 74 bzw. des Motors und des Zahnrads 60, können diese jedoch auch in zwei unterschiedliche Zahnstangen der oberen horizontalen Führung 15 eingreifen.

Die hier gezeigte Vorrichtung kann in verschiedenster Weise an die jeweiligen Anforderungen angepasst werden.

Beispielsweise kann anstelle zweier Regale 4 kann auch nur ein Regal vorgesehen sein, das entlang der Lagergasse 5 angeordnet ist.

Sollen verschiedene Arten von Laborgütern gelagert werden, so können unterschiedliche Lagerschächte mit entsprechend grossen Lagerpositionen vorgesehen sein.

Die in den Ausführungsbeispielen verwendeten Zahnstangen 19, 21, 35a, 65 können an sich auch durch Zahnriemen ersetzt werden. Zahnriemen sind jedoch für weite Temperaturbereiche, z.B. von -20°C bis +70°C, wie sie in einem Klimaschrank herrschen können, nicht gut geeignet, weshalb die Verwendung von Zahnstangen und entsprechenden Antriebsritzeln bevorzugt ist.

In den gezeigten Ausführungen ist der Horizontalmotor 18 an der oberen horizontalen Führung 15 angeordnet. Je nach Platzverhältnissen kann er jedoch auch an der unteren horizontalen Führung 15' angeordnet sein. In diesem Falle überträgt die Welle 62 die Antriebsenergie von unten nach oben.

Es können auch zwei getrennte, synchron arbeitende Horizontalmotoren vorgesehen sein, von denen der eine die vertikale Führung 16 an der oberen horizontalen Führung 15 antreibt. Der andere treibt die vertikale Führung 16 an der unteren horizontalen Führung 15' an. In diesem Falle kann die Welle 62 entfallen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Automatische Lagervorrichtung für Laborgüter, insbesondere Mikrotiterplatten, mit mindestens einem, entlang einer Lagergasse (5) angeordneten Regal (4) zur Aufnahme der Laborgüter und einem Regalbediengerät (6), welches eine in der Lagergasse (5) verfahrbare Aufnahmevorrichtung (17) aufweist, wobei das Regalbediengerät (6) mindestens eine horizontale Führung (15, 15') und eine an der horizontalen Führung geführte vertikale Führung (16) aufweist, wobei die Aufnahmevorrichtung (17) an der vertikalen Führung (16) höhenverstellbar angeordnet ist, und wobei weiter ein Längsantrieb (18, 74, 60, 62, 64) vorgesehen ist um die vertikale Führung (16) der horizontalen Führung (15, 15') entlang zu bewegen,
wobei eine obere horizontale Führung (15) vorgesehen ist, welche in einem oberen Endbereich der vertikalen Führung (16) angeordnet ist, und wobei der Längsantrieb (18, 74, 60, 62, 64) obere Antriebsmittel aufweist, welche zum Antreiben der vertikalen Führung (16) an der oberen horizontalen Führung (15) ausgestaltet sind,
**dadurch gekennzeichnet, dass** eine untere horizontale Führung (15') vorgesehen ist, welche in einem unteren Endbereich der vertikalen Führung angeordnet ist, und dass der Längsantrieb (18, 74, 60, 62, 64) untere Antriebsmittel aufweist, wobei die unteren Antriebsmittel (60, 62, 64) zum Antreiben der vertikalen Führung (16) an der unteren horizontalen Führung (15) ausgestaltet sind.

2. Lagervorrichtung nach Anspruch 1, **dadurch gekennzeichnet, dass** die oberen und die unteren Antriebsmittel die vertikale Führung (16) synchron antreiben.

3. Lagervorrichtung nach einem der vorangehenden Ansprüche, **dadurch gekennzeichnet, dass** die Antriebsmittel über eine sich zwischen den Endbereichen der vertikalen Führung (16) erstreckende Welle (62) gekoppelt sind, und insbesondere, dass die Welle (62) sich mit der vertikalen Führung mitbewegt.

4. Lagervorrichtung nach einem der vorangehenden Ansprüche, **dadurch gekennzeichnet, dass** die obere und die untere vertikale Führung je eine Zahnstange (19, 65) aufweisen, wobei das obere und das untere Antriebsmittel mit je mindestens einem Antriebsritzel (74, 64) die jeweilige Zahnstange kämmen.

5. Lagervorrichtung nach den Ansprüchen 3 und 4, wobei ein Horizontalmotor (18) vorgesehen ist, der über ein erstes Antriebsritzel (74) mit der Zahnstange (19) einer ersten (15) der horizontalen Führungen in Eingriff steht und die Welle über ein Zahnrad (60) von der ersten horizontalen Führung angetrieben wird und ein zweites (64) der Antriebsritzel antreibt.

6. Lagervorrichtung nach einem der vorangehenden Ansprüche, wobei die vertikale Führung (16) an der oberen und der unteren horizontalen Führung (15, 15') drehfest gelagert ist, derart, dass eine Torsion der vertikalen Führung (16) vermieden wird.

7. Lagervorrichtung nach Anspruch 6, **dadurch gekennzeichnet, dass** die vertikale Führung (16) an der oberen und der unteren horizontalen Führung (15, 15') über je mindestens zwei voneinander beabstandete Paare von Andruckrollen und/oder Zahnrädern (64, 77, 78; 60, 72 - 74) geführt ist.

8. Lagervorrichtung nach einem der vorangehenden Ansprüche, mit einem Schwenkantrieb (27) zum Verschwenken der Aufnahmevorrichtung (17) relativ zur vertikalen Führung (17).

9. Lagervorrichtung nach einem der vorangehenden Ansprüche, wobei beiderseits der Lagergasse (5) Regale (4) angeordnet sind.

10. Lagervorrichtung nach einem der vorangehenden Ansprüche, wobei die Aufnahmevorrichtung zur Manipulation einzelner Mikrotiterplatten ausgestaltet ist.

11. Klimaschrank mit einer Lagervorrichtung nach einem der vorangehenden Ansprüche.

12. Klimaschrank mit einer automatischen Lagervorrichtung nach einem der vorangehenden Ansprüche, für Laborgüter, insbesondere Mikrotiterplatten, wobei das Regal vertikale Pfosten (39) aufweist, welche fest mit einem oder mehreren Tablaren (41) verbunden sind.

13. Klimaschrank nach Anspruch 12, **dadurch gekennzeichnet, dass** pro Regal (4) mehrere Tablare (41) vorgesehen sind.

14. Klimaschrank nach einem der Ansprüche 12 oder 13, **dadurch gekennzeichnet, dass** jedes Tablar (41) einteilig ist.

15. Klimaschrank nach einem der Ansprüche 12 bis 14, **dadurch gekennzeichnet, dass** mindestens ein Teil der Tablare Lagerschächte (42) trägt, wobei jeder Lagerschacht mehrere übereinander angeordnete Lagerpositionen zur Aufnahme von Laborgütern aufweist.

16. Klimaschrank mit einer automatischen Lagervorrichtung nach einem der Ansprüche 1 bis 10, mit mindestens einem Lagerschacht (42), wobei der Lagerschacht mehrere übereinander angeordnete Lagerpositionen zur Aufnahme von Laborgütern aufweist und das Regalbediengerät (6) mindestens einen Antrieb aufweist für eine vertikale und/oder horizontale Bewegung, wobei der Antrieb ein Ritzel (64, 74) aufweist, welches in eine Zahnstange (19, 65) eingreift.

17. Klimaschrank nach Anspruch 16, wobei die Regale (4) Lagerschächte (42) mit Lagerpositionen (47) mit mehreren Lagerplätzen hintereinander aufweisen, wobei jeder Lagerplatz zur Aufnahme eines Laborguts ausgestaltet ist und Haltemittel (50) aufweist, mit welchen das jeweilige Laborgut in einer Längsrichtung der Lagerposition festhaltbar ist,

18. Klimaschrank nach Anspruch 17, wobei jede Lagerposition (47) zwei parallel und auf gleicher Höhe verlaufende Auflagen (45) aufweist, auf die gegenüberliegende Randbereiche der Laborgüter in der Lagerposition (47) abstützbar sind, und wobei die Haltemittel (50) von Erhöhungen gebildet sind, von den Auflagen (45) gegen oben ragen.

## Claims

1. Automatic storage device for laboratory goods, particularly for microtiter plates, with at least a shelf (4) for receiving the laboratory goods, arranged along a storage aisle (5), and a shelf operating device (6) having a receiving device (17) which is movable in the storage aisle (5), wherein the shelf operating device (6) has at least a horizontal guide (15, 15') and a vertical guide (16) which is guided at the horizontal guide, wherein the receiving device (17) is arranged in a height-adjustable way at the vertical guide (16), and wherein furthermore a longitudinal drive (18, 74, 60, 62, 64) is provided for moving the vertical guide (16) along the horizontal guide (15, 15'),
wherein a top horizontal guide (15) is provided, which is arranged in a top end section of the vertical guide (16), and wherein the longitudinal drive (18, 74, 60, 62, 64) has top actuating means which are adapted to drive the vertical guide (16) at the top horizontal guide (15),
**characterized in that** a bottom horizontal guide (15') is provided, which is arranged in a bottom end section of the vertical guide, and wherein the longitudinal drive (18, 74, 60, 62, 64) has bottom actuating means, wherein the bottom actuating means (60, 62, 64) are adapted to drive the vertical guide (16) at the bottom horizontal guide (15).

2. Storage device according to claim 1, **characterized in that** the top and the bottom actuating means drive the vertical guide (16) synchronously.

3. Storage device according to one of the preceding claims, **characterized in that** the actuating means are coupled via an axle (62) extending between the end sections of the vertical guide (16), and particularly **in that** the axle (62) moves along with the vertical guide.

4. Storage device according to one of the preceding claims, **characterized in that** the top and the bottom vertical guide have each a toothed bar (19, 65), wherein the top and the bottom actuating means comb the respective toothed bar each with at least one drive pinion (74, 64).

5. Storage device according to claims 3 and 4, wherein a horizontal motor (18) is provided, which engages the toothed bar (19) of a first one (15) of the horizontal guides via a first drive pinion (74) and the axle is driven by the first horizontal guide via a toothed wheel (60) and drives a second one (64) of the drive pinions.

6. Storage device according to one of the preceding claims, wherein the vertical guide (16) is supported at the top and the bottom horizontal guide (15, 15') in a torque-proof way, in such a way that a torsion of the vertical guide (16) is avoided.

7. Storage device according to claim 6, **characterized in that** the vertical guide (16) is guided at the top and the bottom horizontal guide (15, 15') each by at least two pairs of pressure rollers which are at a mutual distance and/or toothed wheels (64, 77, 78; 60, 72 - 74).

8. Storage device according to one of the preceding claims, with a swivel drive (27) for swiveling the receiving device (17) relatively to the vertical guide (17).

9. Storage device according to one of the preceding claims, wherein shelves (4) are arranged on both sides of the storage aisle (5).

10. Storage device according to one of the preceding claims, wherein the receiving device is adapted to manipulate individual microtiter plates.

11. Climatic chamber with a storage device according to one of the preceding claims.

12. Climatic chamber with an automatic storage device according to one of the preceding claims, for laboratory goods, particularly microtiter plates, wherein the shelf has vertical posts (39) which are firmly connected to one or more trays (41).

13. Climatic chamber according to claim 12, **characterized in that** multiple trays (41) per shelf (4) are provided.

14. Climatic chamber according to one of the claims 12 or 13, **characterized in that** each tray (41) is in one piece.

15. Climatic chamber according to one of the claims 12 to 14, **characterized in that** at least a part of the trays carries storage shafts (42), wherein each storage shaft has a plurality of storage positions, arranged one above the other, for receiving laboratory goods.

16. Climatic chamber with an automatic storage device according to one of the claims 1 to 10, with at least a storage shaft (42), wherein the storage shaft has a plurality of storage positions, arranged one above the other, for receiving laboratory goods, and the shelf operating device (6) has at least a drive for a vertical and/or horizontal movement, wherein the drive has a pinion (64, 74) which engages a toothed bar (19, 65).

17. Climatic chamber according to claim 16, wherein the shelves (4) have storage shafts (42) with storage positions (47) with multiple storage locations in succession, wherein each storage location is adapted to receive a laboratory object and has retaining means (50) by means of which the respective laboratory object can be retained in longitudinal direction of the storage position.

18. Climatic chamber according to claim 17, wherein each storage position (47) has two parallel supporting surfaces (45) at the same height, on which two opposed edge sections of the laboratory goods can be supported in the storage position (47), and wherein the retaining means (50) are formed by elevations from which supporting surfaces (45) protrude upwards.

## Revendications

1. Dispositif de stockage automatique pour des articles de laboratoire, particulièrement des plaques de microtitration, avec au moins un rayonnage (4) pour recevoir les articles de laboratoire, arrangé le long d'une voie de stockage (5), et un dispositif d'opération de rayonnage (6) ayant un dispositif de réception (17) déplaçable dans la voie de stockage (5), le dispositif d'opération de rayonnage (6) ayant au moins un guidage horizontal (15, 15') et un guidage vertical (16) guidé au guidage horizontal, le dispositif de réception (17) étant arrangé de manière ajustable en hauteur au guidage vertical (16), et un entraînement longitudinal (18, 74, 60, 62, 64) étant prévu pour déplacer le guidage vertical (16) le long du guidage horizontal (15, 15'),
un guidage horizontal supérieur (15) étant prévu, qui est arrangé dans une section finale supérieure du guidage vertical (16), et l'entrainement longitudinal (18, 74, 60, 62, 64) ayant des moyens supérieurs d'entrainement adaptés à entrainer le guidage vertical (16) au guidage horizontal supérieur (15),
**caractérisé en ce qu'**un guidage horizontal inférieur (15') est prévu, qui est arrangé dans une section finale inférieure du guidage vertical, et l'entrainement longitudinal (18, 74, 60, 62, 64) ayant des moyens d'entrainement inférieurs, les moyens d'entrainement inférieurs (60, 62, 64) étant adaptés à entrainer le guidage vertical (16) au guidage horizontal inférieur (15).

2. Dispositif de stockage selon la revendication 1, **caractérisé en ce que** les moyens d'entrainement supérieur et inférieur entrainent le guidage vertical (16) de manière synchrone.

3. Dispositif de stockage selon l'une des revendications précédentes, **caractérisé en ce que** les moyens d'entrainement sont couplés par un axe (62) qui s'étend entre les sections finales du guidage vertical (16), et particulièrement **en ce que** l'axe (62) se déplace ensemble avec le guidage vertical.

4. Dispositif de stockage selon l'une des revendications précédentes, **caractérisé en ce que** le guidage vertical supérieur et inférieur ont chacun une barre crantée (19, 65), le moyen d'entrainement vertical supérieur et inférieur combe la respective barre crantée chacun avec au moins un pignon d'entrainement (74, 64).

5. Dispositif de stockage selon les revendications 3 et 4, un moteur horizontal (18) étant prévu, qui engage la barre crantée (19) d'un premier (15) des guidages horizontaux par un premier pignon d'entrainement (74) et l'axe étant entrainé par le premier guidage horizontal par une roue dentée (60) et entrainant un deuxième (64) des pignons d'entrainement.

6. Dispositif de stockage selon l'une des revendications précédentes, le guidage vertical (16) étant supporté au guidage horizontal supérieur et inférieur (15, 15') de manière fixe en rotation, de sorte qu'une torsion du guidage vertical (16) est évitée.

7. Dispositif de stockage selon la revendication 6, **caractérisé en ce que** le guidage vertical (16) est guidé au guidage horizontal supérieur et inférieur (15, 15'), chacun par au moins deux paires de rouleaux de pression à une distance mutuelle et/ou des roues dentées (64, 77, 78; 60, 72 - 74).

8. Dispositif de stockage selon l'une des revendications précédentes, avec un entrainement pivotant (27) pour pivoter le dispositif de réception (17) par rapport au guidage vertical (17).

9. Dispositif de stockage selon l'une des revendications précédentes, des rayonnages (4) étant arrangés des deux côtés de la voie de stockage (5).

10. Dispositif de stockage selon l'une des revendications précédentes, le dispositif de réception étant adapté à manipuler des plaques de microtitration individuelles.

11. Chambre climatique avec un dispositif de stockage selon l'une des revendications précédentes.

12. Chambre climatique avec un dispositif de stockage automatique selon l'une des revendications précédentes, pour des articles de laboratoire, particulièrement des plaques de microtitration, le rayonnage ayant des poteaux verticaux (39) connectés de manière fixe avec un ou plusieurs plateaux (41).

13. Chambre climatique selon la revendication 12, **caractérisée en ce que** plusieurs plateaux (41) par rayonnage (4) sont prévus.

14. Chambre climatique selon l'une des revendications 12 ou 13, **caractérisée en ce que** chaque plateau (41) est en une pièce.

15. Chambre climatique selon l'une des revendications 12 à 14, **caractérisée en ce qu'**au moins une partie des plateaux porte des puits de stockage (42), chaque puit de stockage ayant une pluralité de positions de stockage, arrangées l'une au-dessus de l'autre, pour recevoir des biens de laboratoire.

16. Chambre climatique avec un dispositif de stockage automatique selon l'une des revendications 1 à 10, avec au moins un puit de stockage (42), le puit de stockage ayant une pluralité de positions de stockage arrangées l'une au-dessus de l'autre, pour recevoir des biens de laboratoire, et le dispositif d'opération de rayonnage (6) ayant au moins un entrainement pour un mouvement vertical et/ou horizontal, l'entrainement ayant un pignon (64, 74) qui engage une barre dentée (19, 65).

17. Chambre climatique selon la revendication 16, les rayonnages (4) ayant des puits de stockage (42) avec des positions de stockage (47) avec des multiples endroits de stockage successifs, chaque endroit de stockage étant adapté à recevoir un objet de laboratoire et ayant des moyens de retenue (50) à l'aide desquels l'objet de laboratoire respectif peut être gardé en direction longitudinale de la position de stockage.

18. Chambre climatique selon la revendication 17, chaque position de stockage (47) ayant deux surfaces de support parallèles à la même hauteur, sur lesquelles deux sections de bordure opposées des biens de laboratoire peuvent être supportées dans la position de stockage (47), et les moyens de retenue (50) étant formés par des élévations à partir desquelles des surfaces de support (45) font saille vers le haut.
